# EUROPEAN PATENT SPECIFICATION

(11) **EP 4 565 105 B1**
(45) Date of publication and mention of the grant of the patent: **18.03.2026**
(21) Application number: 23716480.1
(22) Date of filing: 30.03.2023
(51) Int. Cl.: A47L 11/282, A47L 11/40

(54) **CLEANING ASSEMBLY FOR SURFACE CLEANING, SURFACE CLEANING DEVICE, AND SURFACE CLEANING METHOD**
REINIGUNGSANORDNUNG FÜR DIE OBERFLÄCHENREINIGUNG, OBERFLÄCHENREINIGUNGSVORRICHTUNG UND VERFAHREN ZUR OBERFLÄCHENREINIGUNG
ENSEMBLE DE NETTOYAGE POUR LE NETTOYAGE DE SURFACES, DISPOSITIF DE NETTOYAGE DE SURFACES ET MÉTHODE DE NETTOYAGE DE SURFACES

(30) Priority: 02.08.2022 CN 202210921852
(43) Date of publication of application: 11.06.2025
(73) Proprietor: Versuni Holding B.V., 5656 AE Eindhoven (NL)
(72) Inventor: GE, Chuang, 5656 AE Eindhoven (NL); SUM, Meng, 5656 AE Eindhoven (NL); WANG, Xiayu, 5656 AE Eindhoven (NL)
(74) Representative: Vollering, Stefanus Franciscus Maria
(86) International application number: PCT/EP2023/058384
(87) International publication number: WO 2024/027958

(56) References cited:
- CN-A- 111 973 088
- CN-A- 114 587 193
- CN-U- 214 804 444
- CN-U- 214 804 446
- US-A- 3 813 723
- US-B1- 9 192 274

## Description

### FIELD OF THE INVENTION

The present invention relates to a field of cleaning technologies, and more particularly, to a cleaning assembly for surface cleaning, a surface cleaning device, and a surface cleaning method.

### BACKGROUND OF THE INVENTION

Cleaning equipment is common tools in industries and daily life, and is often used to clean floors, tiles, carpets, walls, or surfaces of other things. There are many types of cleaning equipment, which may have different types of cleaning structures to clean a surface to be cleaned. The cleaning equipment may clean the surface to be cleaned with a mop, a rolling brush, or a cleaning roller, or the like.

Currently, cleaning equipment may usually have one rolling brush or two rolling brushes, where in case of cleaning a floor or a wall, the brush(es) may have a very small contact area with the surface to be cleaned. In a single push-and-pull operation, the mop may contact transitorily with the surface to be cleaned, resulting in low cleaning efficiency.

For cleaning equipment with a crawler mop, the crawler mop has a longer time to contact the surface to be cleaned. However, detachment of the crawler mop is inconvenient and troublesome to users. For example, CN214804446U discloses a mopping assembly for use in a cleaning robot, comprising a mop support, rollers, and a mop wrapping around the rollers. Unfolding and folding of the mop support are achieved by a complicated structure with a first support and a second support, which are connected slidably to get close to or away from each other.

CN114587193A provides a mopping assembly which is applied to cleaning equipment and comprises a rotating assembly, the rotating assembly comprises a first rotating part, a second rotating part and a connecting part connecting the first rotating part and the second rotating part, the first rotating part and the second rotating part are arranged in parallel, the connecting part comprises an elastic assembly, and the elastic assembly is connected with the first rotating part and the second rotating part. The first rotating part and the second rotating part are close to each other or far away from each other through the elastic assembly; and the mop cloth is arranged on the rotating assembly in a sleeving manner. Compared with the prior art, the mopping assembly has the advantages that the elastic assembly is arranged to change the distance between the first rotating part and the second rotating part, the cleaning effect and adaptability of the mopping assembly are improved, the rotating assembly is arranged to rotate the mop cloth, and the cleaning efficiency of the mopping assembly is improved. CN111973088A provides a floor mopping robot based on artificial intelligence. The floor mopping robot comprises a machine body, a first driving device and a floor mopping device; the bottom of the machine body is provided with walking wheels; the first driving device is arranged in the machine body to drive the walking wheels to rotate;the floor mopping device is arranged on the machine body; and the floor mopping device comprises a mop unit, a mounting shell, a second driving device and a connecting device. The floor mopping robotbased on artificial intelligence has a better floor mopping effect. US9192274B1 discloses a floor wiping mechanism for mounting in the body of a self-propelled floor cleaner disclosed to include a frame defining an opening, two rotating shafts suspending in the opening of the frame at two opposite lateral sides in a parallel manner with respective opposite ends thereof positioned in the frame, a wiping cloth made in the form of an endless belt and mounted around the two rotating shafts. When the self-propelled floor cleaner is steering, the floor wiping mechanism is moved with the self-propelled floor cleaner, causing the wiping cloth to wipe the floor.

Therefore, there is a need in the field for an improved cleaning assembly for surface cleaning, surface cleaning device and surface cleaning method.

### SUMMARY OF THE INVENTION

The present invention provides a cleaning assembly for surface cleaning, a surface cleaning device and a surface cleaning method, with one or more of the following advantages. In one aspect, the cleaning assembly can provide a large contact area between a cleaning member and a surface to be cleaned, thereby improving cleaning efficiency. In another aspect, the cleaning member can be conveniently attached to or detached from the cleaning assembly. In yet another aspect, the cleaning assembly may have a pressure unit which provides tight contact between the cleaning member and a surface to be cleaned, thereby improving a cleaning effect. The cleaning assembly, the surface cleaning device, and the surface cleaning method of the present invention may have additional advantages.

According to an embodiment of the present invention, a cleaning assembly for surface cleaning is provided. The cleaning assembly comprises: a mounting bracket having a first surface and an opposite second surface, the first surface and/or the second surface being disposed with a guide; a first driving roller rotatably disposed between the first surface and the second surface of the mounting bracket; a second driving roller which includes a moving element engaged with the guide, wherein the second driving roller is made to move away from or towards the first driving roller as the moving element of the second driving roller moves along the guide; a cleaning member wrapped around the first driving roller and the second driving roller, and a pressure unit disposed on the mounting bracket, the cleaning member including an active section for contacting with a surface to be cleaned, the pressure unit being in contact with an inner surface of the active section of the cleaning member. The cleaning member can be attached or detached conveniently when the second driving roller is close to the first driving roller. When the second driving roller is distant from the first driving roller, the cleaning member can be tensioned so as to perform a cleaning operation, thereby increasing a contact area between the cleaning member and a surface to be cleaned. The pressure unit may provide a tension force to the cleaning member. Further, the pressure unit may enable the cleaning member to contact a surface to be cleaned more tightly, thereby improving a cleaning effect.

In one aspect, for the cleaning assembly as above, the second driving roller further comprises a shaft and a fixed frame, the shaft passing through the fixed frame and being rotatable with respect to the fixed frame. Consequently, the cleaning member may rotate in a same direction as the first driving roller and the second driving roller.

In one aspect, for any of the cleaning assembly as above, the moving element comprises a first moving element disposed at an end of the second driving roller and/or a second moving element disposed at another end of the second driving roller, the first moving element being disposed on the shaft or including an end of the shaft, the second moving element being disposed on the fixed frame.

In one aspect, any of the cleaning assembly as above further comprises an elastic element, wherein the mounting bracket including a raised structure on the first surface and/or the second surface, the elastic element being disposed between the raised structure of the mounting bracket and the fixed frame. The elastic element may keep the second driving roller distant from the first driving roller. Preferably, the elastic element may be in a somewhat pre-compressed state such that a crawler mop is tensioned, thereby increasing a contact area between the mop and a surface to be cleaned.

In one aspect, for any of the cleaning assembly as above, the fixed frame comprises a first fixed frame which includes a hook member, and the mounting bracket includes a stopper disposed on the second surface, wherein the hook member of the first fixed frame gets stuck on the stopper as the second driving roller moves towards the first driving roller. Thus, the second driving roller may be retained in a place close to the first driving roller, to facilitate attachment or detachment of the cleaning member.

In one aspect, any of the cleaning assembly as above further comprises a release element disposed on the mounting bracket, wherein the release element, upon being actuated by a force, drives the stopper to disengage from the hook member of the first fixed frame. For example, by pressing the release element after attachment of the cleaning member, the second driving roller may move away from the first driving roller, such that the cleaning member is tensioned for a cleaning operation.

In one aspect, for any of the cleaning assembly as above, the mounting bracket includes a protrusion portion disposed on the first surface, and the fixed frame further comprises a second fixed frame which includes a gap, wherein the protrusion portion on the first surface of the mounting bracket is fitted into the gap of the second fixed frame as the second driving roller moves close to the first driving roller. In this case, in conjunction with the hook member of the first fixed frame being stuck on the stopper, both ends of the second driving roller may be retained steadily close to the first driving roller.

In one aspect, any of the cleaning assembly as above further comprises a release stick disposed between the first surface and the second surface of the mounting bracket, the release stick including a step, wherein the fixed frame includes a hook member, which gets stuck on the step of the release stick as the second driving roller moves close to the first driving roller. Thus, the second driving roller may be retained in a place close to the first driving roller, to facilitate attachment or detachment of the cleaning member.

In one aspect, for any of the cleaning assembly as above, the release stick is moveably disposed on the mounting bracket, wherein the hook member of the fixed frame disengages from the step of the release stick if the release stick is actuated by a force. For example, by pressing the release element after attachment of the cleaning member, the second driving roller may move away from the first driving roller, such that the cleaning member is tensioned for a cleaning operation.

In one aspect, any of the cleaning assembly as above further comprises an additional driving roller disposed on the shaft of the second driving roller and between the fixed frame and the first and/or second surface of the mounting bracket. Such a three-segmented or multiple-segmented driving roller may increase a width of the mop, thereby achieving better edge cleaning effects at both sides.

In one aspect, for any of the cleaning assembly as above, the pressure unit includes a raised rib and/or a wheel. The raised rib and/or wheel may provide a required pressure, while reducing friction with the inner surface of the cleaning member, which facilitates the cleaning member to rotate along with the first driving roller and the second driving roller.

In one aspect, for any of the cleaning assembly as above, the first driving roller may have a diameter same as that of the second driving roller. In this case, the first driving roller and the second driving roller may rotate synchronously. Preferably, the first driving roller may have a diameter larger than that of the second driving roller, so as to provide better edge cleaning effects at front edge, e.g., when a crawler mop is used to clean a corner.

According to an embodiment of the present invention, a surface cleaning device comprising any of the cleaning assembly as above is provided. The cleaning assembly of the present disclosure may be attached to a cleaner head of the surface cleaning device, or may be detached from the surface cleaning device conveniently.

According to an embodiment of the present invention, a surface cleaning method with any of the cleaning assembly as above is provided. The method comprises: actuating the second driving roller to move towards the first driving roller; and attaching or detaching the cleaning member when the second driving roller is close to the first driving roller.

In one aspect, the surface cleaning method further comprises: actuating the second driving roller to move away from the first driving roller so as to expand the cleaning member, after the cleaning member is wrapped around the first driving roller and the second driving roller; enabling an outer surface of a portion of the cleaning member between the first driving roller and the second driving roller to contact a surface to be cleaned; and rotating the first driving roller and the second driving roller.

### BRIEF DESCRIPTION OF THE DRAWINGS

FIG. 1 is a schematic view for a first state of a cleaning assembly in an embodiment of the present disclosure;
FIG. 2 is a schematic view for a second state of a cleaning assembly in an embodiment of the present disclosure;
FIG. 3 is an exploded schematic view of a cleaning assembly in an embodiment of the present disclosure;
FIG. 4 is a partial structural schematic view of a cleaning assembly in a first state in an embodiment of the present disclosure;
FIG. 5 is a partial structural schematic view with a second driving roller and a first driving roller approaching each other in an embodiment of the present disclosure;
FIG. 6 is a partial structural schematic view of a cleaning assembly in a second state in an innovative embodiment of the present disclosure;
FIG. 7 shows a top view (upper), a front view (middle), and a bottom view (lower) of a release stick in an innovative embodiment of the present invention;
FIG. 8 is a schematic view for a first state of a cleaning assembly in another embodiment of the present disclosure;
FIG. 9 is a schematic view for a second state of a cleaning assembly in another embodiment of the present disclosure;
FIG. 10 is an exploded schematic view of a cleaning assembly in another embodiment of the present disclosure;
FIG. 11 is a cross-sectional view along a direction A-A of a cleaning assembly in another embodiment of the present disclosure;
FIG. 12 is a cross-sectional view along a direction B-B of a cleaning assembly in another embodiment of the present disclosure;
FIG. 13 is a cross-sectional view along a direction C-C of a cleaning assembly in another embodiment of the present disclosure;
FIG. 14 is a cross-sectional view along a direction D-D of a cleaning assembly in another embodiment of the present disclosure;
FIG. 15 is a partial structural schematic view of a cleaning assembly in a second state in another embodiment of the present disclosure;
FIG. 16 is a structural schematic view of a surface cleaning device in an embodiment of the present disclosure;
FIG. 17 is a structural schematic view of a cleaner head of a surface cleaning device in an embodiment of the present disclosure;
FIG. 18 is a side cross-sectional view of a surface cleaning device in an embodiment of the present disclosure;
FIG. 19 is a side cross-sectional view of a surface cleaning device in another embodiment of the present disclosure;
FIG. 20 is a schematic view of a fixed frame of a cleaning assembly in another embodiment of the present disclosure;
FIG. 21 is a surface cleaning method with a cleaning assembly in an embodiment of the present disclosure.

### Description of Reference Labels:

1-Cover Board; 2-Snap Ring; 3-Grip; 4-Snap Ring; 5-First Mounting Bracket; 6-Bearing; 7-Positioning Pin; 8-Retainer; 9-Release Stick; 91-End of Release Stick; 92-Rib; 10-Magnet; 11-First Driving Roller; 12-Pressure Unit; 13-Cleaning Member; 14-Retainer; 15-Drive Spline; 16-Bearing; 17-Snap Ring; 18-Second Mounting Bracket; 19-Snap Ring; 20-Release Stick Spring; 21-Bearing; 22-Positioning Pin; 23-Elastic Element; 24-Snap Ring; 25-Washer; 26-First Additional Driving Roller; 27-Positioning Pin; 28-Positioning Pin; 29-First Fixed Frame; 30-Bearing; 31-Elastic Element; 32-Second Driving Roller; 33-Bearing; 34-Second Fixed Frame; 35-Positioning Pin; 36-Second Additional Driving Roller; 37-Washer; 38-Snap Ring; 39-Positioning Pin; 40-Bearing; 41-Guide; 42-Guide; 43-Release Element; 44-Stopper; 45-Stopper Spring; 46-Metal Scraper; 47-Water Outlet; 48-Upper Brush Cover; 49-Lower Brush Cover; 50-Transparent Housing; 51-Protrusion Portion; 52-Recess; 53-Step of Release Stick; 54- Hook Member; 55-Step of Release Stick; 56-Hook Member; 57-Handle; 58-Body; 59-Cleaner Head; 60-Stiffener.

### DETAILED DESCRIPTION

Technical schemes of embodiments of the present invention will be described clearly and fully below, in connection with figures according to embodiments of the present invention.

The terms "first", "second", and the like, in the description and claims of the present invention, are used for distinguishing between similar elements and not necessarily for describing a sequential or chronological order. It is appreciated that, such terms may be interchangeable as appropriate, such that embodiments of the present disclosure may be implemented in an order other than that depicted or described herein. Moreover, the term "and/or" in the description and claims represents at least one of the linked objects, while the symbol "/" generally represents an "or" relationship between objects linked thereby.

In addition, in the description of the present disclosure, a directional term such as "up", "low", "front", "back", "left", "right", "top", "bottom", "inner", "outer", or the like, indicates a directional or location relationship on a page shown by a figure, and is only used for description and understanding, rather than indicating or implying that various elements must have specific directions, nor limiting the present invention.

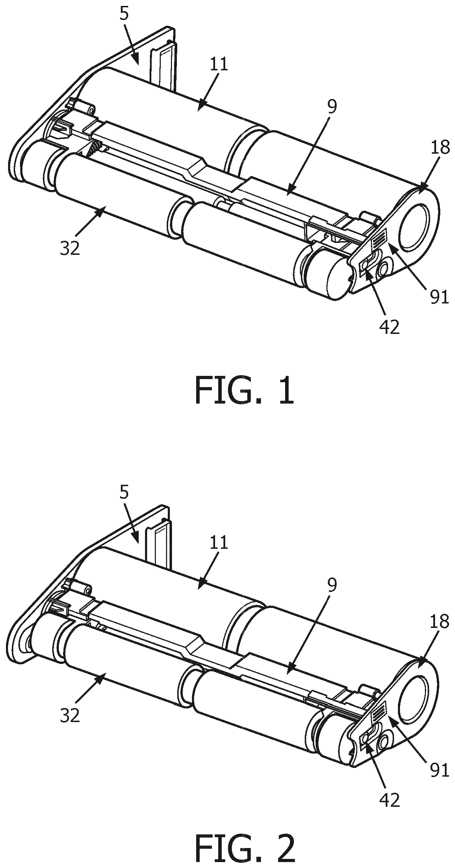

FIG. 1 is a schematic view for a first state of a cleaning assembly in an embodiment of the present disclosure. The cleaning assembly may include a mounting bracket (5, 18), wherein the mounting bracket includes a first surface and an opposite second surface. By example and without limitation, the mounting bracket may include a first mounting bracket 5 and a second mounting bracket 18, where the first mounting bracket 5 has a first surface (e.g., a surface of the first mounting bracket 5 facing towards the right) facing the second mounting bracket 18, and the second mounting bracket 18 has a second surface (e.g., a surface of the second mounting bracket 18 facing towards the left) facing the first mounting bracket 5. The first surface of the first mounting bracket 5 and the second surface of the second mounting bracket 18 may be planar or non-planar, and the first surface and the second surface may have various protruding or recessing structures, e.g., for arranging components or parts. Further, the first mounting bracket 5 or the first surface thereof may be parallel or near parallel, or may be non-parallel, with the second mounting bracket 18 or the second surface thereof. For example, the first mounting bracket 5 may be at some angle with respect to the second mounting bracket 18. The mounting bracket (5, 18) may be made of various types of proper materials, such as plastic, metal, alloy, etc. In addition, various structures on the mounting bracket (5, 18) for arranging components or parts may be made of the same or different materials as the body of the mounting bracket (5, 18).

A space between the first surface of the first mounting bracket 5 and the second surface of the second mounting bracket 18 may receive a plurality of components or parts of the cleaning assembly, such as a first driving roller 11, a second driving roller 32, an optional release stick 9, etc. The first driving roller 11 and the second driving roller 32 each may be a column, such as a cylinder, a roller, a shaft, an irregular cylinder-like structure, a polyhedral column, etc. The first driving roller 11 and the second driving roller 32 may be solid or hollow, partially hollow, hollow but supported by a skeleton, etc., and may be made of various types of proper materials, such as plastic, metal, alloy, etc.

The first driving roller 11 may be rotatably disposed between the first surface of the first mounting bracket 5 and the second surface of the second mounting bracket 18. For example, the first driving roller 11 may have a shaft which is connected to the first mounting bracket 5 and the second mounting bracket 18 by a bearing, and the first driving roller 11 may rotate with the shaft. The first surface of the first mounting bracket 5 and the second surface of the second mounting bracket 18 may be provided with holes or bases at corresponding locations, such that the first driving roller 11 can be rotatably disposed between the first surface and the second surface.

A guide may be disposed on the first surface of the first mounting bracket 5 and/or the second surface of the second mounting bracket 18, wherein the second driving roller 32 may include a moving element engaged with the guide, and is connected to guide on the first surface and/or the second surface via the moving element. By example and without limitation, one or both of the first surface of the first mounting bracket 5 and the second surface of the second mounting bracket 18 may have a guide(s), such that one end or both ends of the second driving roller 32 may be engaged with a corresponding guide(s).

The guide on the first surface and/or the second surface may extend in a radial direction of the first driving roller 11 or the second driving roller 32. For example, the guide has one end near the first driving roller 11, and another end distant from the first driving roller 11. The second driving roller 32 may be made to move away from or towards the first driving roller 11 as the moving element of the second driving roller 32 moves along the guide. The guide may be a raised rail, a groove, a gap, etc., in a straight or curved form. The moving element may be a wheel, a slider, a screw, a positioning pin, etc., and may move along the guide. FIG. 1 shows a guide 42 on the second mounting bracket 18. As an example, the guide 42 is a slot through the second mounting bracket 18.

A cleaning member (not shown in FIG. 1) may be wrapped around the first driving roller 11 and the second driving roller 32. For example, the cleaning member may surround the first driving roller 11 and the second driving roller 32 in a radial direction of the first driving roller 11 or the second driving roller 32. The cleaning member may be made of cotton, velvet, synthetic materials (e.g., nylon), rubber, sponge, and other materials, or may include a mixture of different materials. The cleaning member may be a crawler, an annular belt, etc., wherein the cleaning member is wrapped around the first driving roller 11 and the second driving roller 32, and may enclose other components between the first driving roller 11 and the second driving roller 32.

When a user need to attach or detach the cleaning member, the second driving roller 32 may be applied a force towards the first driving roller 11. In a radial direction, the second driving roller 32 moves close to the first driving roller 11 along the guide(s) of the mounting bracket (5, 18), as shown in FIG. 2. Then, the user may wrap the cleaning member 13 around the first driving roller 11 and the second driving roller 32. Alternatively, an attached cleaning member 13 may be relaxed, and a gap presents between the cleaning member 13 and the first and second driving rollers 11, 32, such that the cleaning member 13 can be detached or replaced.

FIG. 1 shows a schematic view of a first state when the first driving roller 11 is distant from the second driving roller 32. At this time, the first driving roller 11 and the second driving roller 32 expand the cleaning member, which forms an upper surface and a lower surface of the whole cleaning assembly, wherein the lower surface of the cleaning member may contact a surface to be cleaned to perform cleaning, which is referred to as a cleaning state. In a preferred embodiment, the cleaning member may rotate in a same direction as the first driving roller 11 and the second driving roller 32 rotate. During the cleaning, the cleaning member rotates along with the first driving roller 11 and the second driving roller 32, such that different potions of an outer surface of the cleaning member may contact a surface to be cleaned in turn to achieve cleaning functionality, where the cleaning member has a large contact area with the surface to be cleaned. The cleaning member may perform wet wiping or dry wiping on the surface to be cleaned.

Outer surfaces of the first driving roller 11 and the second driving roller 32 may be provided with an anti-slip structure, such as an anti-slip slot, a raised rib, or an anti-slip boss, etc. The first driving roller 11 and the second driving roller 32 may be a cylinder with a rough surface, or may be irregular and cylinder-like, such that the cleaning member may rotate steadily along with the driving rollers, preventing the cleaning member to slide or fall off.

FIG. 2 shows a schematic view of a second state when the first driving roller 11 is close to the second driving roller 32, which is referred to as a mop attaching or detaching state. For example, a user may wrap a cleaning member (e.g., a crawler mop) around the first driving roller 11 and the second driving roller 32. Alternatively, where the first driving roller 11 and the second driving roller 32 has been wrapped by a cleaning member, the first driving roller 11 and the second driving roller 32 would not expand the cleaning member, which may thus be in a relaxed state and can be detached.

In an embodiment according to the present disclosure, an end of the guide on the first surface and/or the second surface may be provided with a curved section or a buckle. When the moving element of the second driving roller 32 arrives at the curved section or the buckle, the second driving roller 32 may be retained at a current location, preventing the moving element of the second driving roller 32 to move further along the guide. For example, when the second driving roller 32 moves away from the first driving roller 11 to a far end of the guide, the curved section or the buckle at the far end of the guide may retain the second driving roller 32 at the far end of the guide, such that the first driving roller 11 and the second driving roller 32 expand the cleaning member, which is thus in a cleaning state (see FIG. 1). When the second driving roller 32 moves towards the first driving roller 11 to a near end of the guide, a curved section or a buckle at the near end of the guide may retain the second driving roller 32 at the near end of the guide, such that the cleaning member can be attached or detached conveniently.

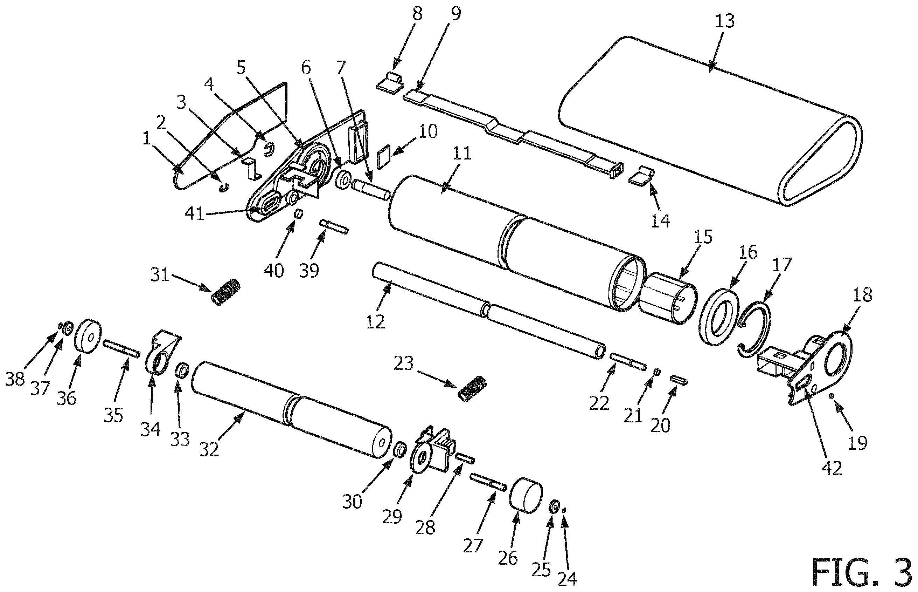

FIG. 3 is an exploded schematic view of a cleaning assembly according to an embodiment of the present disclosure. Various components or parts of the cleaning assembly may be arranged on a mounting bracket (5, 18). As described above, the mounting bracket may include a first mounting bracket 5 (e.g., a left mounting bracket) and a second mounting bracket 18 (e.g., a right mounting bracket). The first mounting bracket 5 and the second mounting bracket 18 each may be in a form of a side board, which may form a side wall of the cleaning assembly. The first mounting bracket 5 may have a first surface (e.g., a surface facing towards an interior of the cleaning assembly), which is in opposite to a second surface of the second mounting bracket 18 (e.g., a surface towards the interior of the cleaning assembly). It is appreciated that, the first surface of the first mounting bracket 5 and the second surface of the second mounting bracket 18 may be planar or non-planar, and the first surface and the second surface may have various protruding or recessing structures, e.g., for arranging components or parts.

The cleaning assembly may include a cover board 1 overlaying outside the first mounting bracket 5. The cover board 1 is optional, and is capable of preventing dust, protecting internal structures of the cleaning assembly, as well as providing safe and aesthetic effects. The cover board 1 may be made of metal materials, alloy materials, plastics, etc. The first mounting bracket 5 may optionally include a grip 3, to facilitate attachment of the whole cleaning assembly to a surface cleaning device (e.g., a floor sweeper) or detachment of the whole cleaning assembly from the surface cleaning device. The grip 3 may be, for example, a handle or a ring, and may be fastened to the first mounting bracket 5, e.g., via a screw. Optionally, a magnet 10 may be disposed on the first mounting bracket 5, to assist fixing the cleaning assembly to the surface cleaning device. For example, the cleaning assembly may be fixed to a lower brush cover of the surface cleaning device, where an iron piece may be disposed at a corresponding location within the lower brush cover.

Two ends of a first driving roller 11 may be rotatably connected to the first mounting bracket 5 and the second mounting bracket 18, respectively. For example, an end of the first driving roller 11 (e.g., a left end as shown in FIG. 3) may be rotatably connected to the first mounting bracket 5 via a positioning pin 7, a bearing 6, and a snap ring 4. The positioning pin 7 may be a portion of the first driving roller 11, or may be fixed to an end of the first driving roller 11, for example. The positioning pin 7 passes through the bearing 6 and may be interference fitted with the bearing 6, which is interference fitted in a bearing base on the first mounting bracket 5. The snap ring 4 may be disposed in a stepped groove of the positioning pin 7, to prevent displacement between interference fitted components. Another end of the first driving roller 11 (e.g., a right end as shown in FIG. 3) may be rotatably connected to the second mounting bracket 18 via a drive spline 15, a bearing 16, and a snap ring 17. By example and without limitation, slots on an outer surface of the drive spline 15 may be engaged with ribs on an inner surface of the first driving roller 11, wherein the drive spline 15 is interference fitted within the first driving roller 11. The bearing 16 is interference fitted within the first driving roller 11, and the snap ring 17 may be deformed by a circlip plier in order to be placed into a limiting groove of the first driving roller 11. The bearing 16 is sleeved on a bearing base of the second mounting bracket 18. A transmission spline of a gearbox assembly (not shown) stretches into the first driving roller 11 to engage with the drive spline 15, so as to drive the first driving roller 11 to rotate.

A guide 41 may be disposed on the first surface of the first mounting bracket 5, and/or a guide 42 may be disposed on the second surface of the second mounting bracket 18. As described above, the guide(s) on the first surface and/or the second surface may extend in a radial direction of the first driving roller 11. For example, the guide 41 or the guide 42 has one end near the first driving roller 11, and another end distant from the first driving roller 11. The guide may be a raised rail, a groove, a gap, etc., in a straight or curved form.

With reference to FIG. 1, the first driving roller 11 and the second driving roller 32 are disposed side by side (in parallel or near-parallel) between the first surface of the first mounting bracket 5 and the second surface of the second mounting bracket 18. A cleaning member 13 (e.g., a crawler mop) may be wrapped around the first driving roller 11 and the second driving roller 32. When the cleaning assembly operates, the drive spline 15 fixed to the first driving roller 11 may be driven by a gearbox assembly and thus rotate, thereby driving the first driving roller 11 to rotate. Due to static friction between the cleaning member 13 and two driving rollers, rotation of the first driving roller 11 would drive the cleaning member 13 to rotate, which in turn drive the second driving roller 32 to rotate in a same direction as the first driving roller 11.

The second driving roller 32 may include a shaft, which may pass through the second driving roller 32 along an axis thereof and stretch out at ends of the second driving roller 32, or the shaft may include separate shaft sections at two ends of the second driving roller 32. FIG. 3 shows that the shaft of the second driving roller 32 includes a first positioning pin 27 and a second positioning pin 35. The first positioning pin 27 and the second positioning pin 35 may be integrated with the second driving roller 32 and operate as a shaft of the second driving roller 32, or the first positioning pin 27 and the second positioning pin 35 may be formed separately and fixed to ends of the second driving roller 32.

Optionally, the second driving roller 32 may further include a first fixed frame 29 (e.g., a right fixed frame) and/or a second fixed frame 34 (e.g., a left fixed frame), wherein the shaft of the second driving roller 32 passes through the first fixed frame 29 and the second fixed frame 34 and is rotatable with respect to the fixed frames. For example, an end of the second driving roller 32 (e.g., a right end as shown in FIG. 3) may be rotatably connected to the first fixed frame 29 via a positioning pin 27 and a bearing 30. Another end of the second driving roller 32 (e.g., a left end as shown in FIG. 3) may be rotatably connected to the second mounting bracket 34 via a positioning pin 35 and a bearing 33. When the second driving roller 32 as well as its shaft (e.g., the positioning pins 27, 35) rotates, the first fixed frame 29 and the second fixed frame 34 do not rotate. The fixed frames (29, 34) may be made of various types of proper materials, such as plastic, metal, alloy, etc.

In an optional embodiment, a first additional driving roller 26 and/or a second additional driving roller 36 may be disposed at an end(s) of the second driving roller 32. The first additional driving roller 26, the second additional driving roller 36 and the second driving roller 32 may form a multiple-segmented driving roller. Such three segments or multiple segments of a driving roller may be connected via a shaft. For example, the first additional driving roller 26 may be fixed to the positioning pin 27 and disposed between the first fixed frame 29 and the second surface of the second mounting bracket 18, and the second additional driving roller 36 may be fixed to the positioning pin 35 via a washer 37 and a snap ring 38 and disposed between the second fixed frame 34 and the first surface of the first mounting bracket 5. The first additional driving roller 26 and the second additional driving roller 36 may rotate along with the shaft of the second driving roller 32. Such a three-segmented or multiple-segmented driving roller may increase a width of the mop, thereby achieving more effective edge cleaning at both sides.

In an embodiment, the first driving roller 11 may have a diameter equal to that of the second driving roller 32. In another embodiment, the first driving roller 11 may have a diameter larger than that of the second driving roller 32, so as to provide a better edge cleaning effect at front, e.g., when the crawler mop is used to clean a corner.

According to various embodiments of the present disclosure, a guide 41 may be disposed on the first surface of the first mounting bracket 5 and/or a guide 42 may be disposed on the second surface of the second mounting bracket 18. The second driving roller 32 may include a moving element engaged with the guide, and thus is connected to the guide on the first surface and/or the second surface via the moving element. The second driving roller 32 may move as the moving element moves along the guide. The moving element of the second driving roller 32 may be disposed on the fixed frame or the shaft of the second driving roller 32, or the moving element may be a portion of the shaft (e.g., including an end of the shaft).

In an embodiment, one of the first mounting bracket 5 and the second mounting bracket 18 may have a guide, e.g., the guide 41 or the guide 42, and one end of the second driving roller 32 near the guide may include a moving element engaged with the guide. Another end of the second driving roller 32 may not engage with a guide, for example, being suspended.

For example, if the second mounting bracket 18 is provided with a guide 42, a moving element may be disposed at a right shaft of the second driving roller 32 (e.g., the positioning pin 27), or the moving element may comprise an end of the right shaft (e.g., the positioning pin 27). By example and without limitation, the positioning pin 27 may pass through the first fixed frame 29 (and the first additional driving roller 26, if any), with an end of the positioning pin 27 (a right end) being exposed. The end of the positioning pin 27 may include a structure such as a wheel or a slider, which may engage with the guide 42 and move along the guide 42. Alternatively, the moving element of the second driving roller 32 may be disposed on the first fixed frame 29. By example and without limitation, the first fixed frame 29 may include a positioning pin 28, which may be a portion of the first fixed frame 29, or may be fixed to the first fixed frame 29. The positioning pin 28 may be coupled to the guide 42 via a snap ring 24 and a washer 25, and may move along the guide 42. As another example, where the first mounting bracket 5 is provided with a guide 41, a moving element may be disposed at a left shaft of the second driving roller 32 (e.g., on the positioning pin 35), or the moving element may include an end of the left shaft (e.g., the positioning pin 35). By example and without limitation, the positioning pin 35 may pass through the second fixed frame 34 (and the second additional driving roller 36, if any), with an end of the positioning pin 35 (a left end) being exposed. Similarly, the end of the positioning pin 35 may include a structure such as a wheel or a slider, which may engage with the guide 41 and move along the guide 41. Alternatively, the moving element on a left side of the second driving roller 32 may be disposed on the second fixed frame 34. For example, the second fixed frame 34 may include a positioning pin (not shown) to engage with the guide 41.

In another embodiment, each of the first mounting bracket 5 and the second mounting bracket 18 may have a guide, e.g., the guide 41 and the guide 42, and both ends of the second driving roller 32 may include moving elements engaged with the guides. The moving element on either end of the second driving roller 32 may be disposed on the shaft at a corresponding side, or may include an end of the shaft at a corresponding side, or may be disposed on the fixed frame at a corresponding side. For example, the moving elements at both ends of the second driving roller 32 may be disposed on the corresponding shafts, or may include ends of the corresponding shafts. For example, the positioning pin 27 and the positioning pin 35 may move along the corresponding guides 42 and 41, respectively. In this case, the guide 41 on the first mounting bracket 5 may align with the guide 42 on the second mounting bracket 18. For another example, the moving element may include a first moving element at one end (e.g., a left end) of the second driving roller 32 and/or a second moving element at another end (e.g., a right end) of the second driving roller 32, wherein the first moving element is disposed at the shaft (e.g., the positioning pin 35) or include an end of the shaft (e.g., the positioning pin 35), while the second moving element (e.g., the positioning pin 28) is disposed at the first fixed frame 29. In this case, the guide 41 on the first mounting bracket 5 may offset from the guide 42 on the second mounting bracket 18 (e.g., rather than aligned).

The second driving roller 32 may be made to move away from or close to the first driving roller 11 when the moving element of the second driving roller 32 moves along the guide of the mounting bracket.

Additionally, one or more optional elastic elements (23, 31) may be disposed between the mounting bracket (5, 18) and the fixed frame (34, 29), to retain a far separation between the second driving roller 32 and the first driving roller 11. By example and without limitation, the elastic elements 23, 31 may be springs, elastic tubes, etc. The elastic elements (23, 31) may be compressed when the second driving roller 32 moves towards the first driving roller 11.

In an embodiment, the second surface of the second mounting bracket 18 has a raised structure (e.g., facing the first mounting bracket 5), as shown in FIG. 3. The raised structure may have a sliding slot extending in a radial direction of the first driving roller 11, and the first fixed frame 29 has a slider engaged with the sliding slot, such that the first fixed frame 29 is slidably connected with the raised structure. One end of the elastic element 23 may abut against the raised structure, while another end of the elastic element 23 may abut against the first fixed frame 29, with an axis of the elastic element 31 being in a radial direction of the first driving roller 11. When the second driving roller 32 moves towards the first driving roller 11, the first fixed frame 29 slides close to the raised structure, and the elastic element 23 may be compressed.

Similarly, the first surface of the first mounting bracket 5 may have a raised structure, where the second fixed frame 34 may be slidably connected to the raised structure in a similar manner, with both ends of the elastic element 31 abutting against the second fixed frame 34 and the raised structure respectively. When the second driving roller 32 moves towards the first driving roller 11, the second fixed frame 34 slides close to the raised structure, and the elastic element 31 may be compressed.

With reference to FIG. 1 and FIG. 3, the cleaning assembly is in a normal cleaning state when the second driving roller 32 is in a first state (distant from the first driving roller), with the cleaning member 13 (e.g., a crawler mop) wrapped around the first driving roller 11 and the second driving roller 32. An inner diameter of the cleaning member 13 may be slightly smaller than a radial perimeter of both the first driving roller 11 and the second driving roller 32, such that the elastic elements (23, 31) are pre-compressed to some extent, and the crawler mop is tensioned, thereby increasing a contact area between the mop and a surface to be cleaned.

Returning to FIG. 3, in an embodiment, the cleaning assembly may include a pressure unit 12 disposed on the mounting bracket (5, 18). The pressure unit 12 may be disposed between the first driving roller 11 and the second driving roller 32, and may contact an inner surface of the cleaning member 13 to apply a tension force to the cleaning member. For example, the cleaning member 13 may include an active section for contacting with a surface to be cleaned (e.g., a lower half of the cleaning member expanded by the first driving roller 11 and the second driving roller 32). The pressure unit 12 may contact an inner surface of the active section of the cleaning member 13, such that the cleaning member 13 may contact the surface to be cleaned more tightly. The cleaning effect may be further improved, by the pressure unit 12 providing a pressure for the cleaning member 13 against the surface to be cleaned.

The pressure unit 12 may be rotatably or non-rotatably connected to the first mounting bracket 5 and/or the second mounting bracket 18. By example and without limitation, FIG. 3 shows a cylindrical pressure unit 12, which may have one end (e.g., a left end as shown in FIG. 3) rotatably connected to the first mounting bracket 5 via a positioning pin 39, a bearing 40 and a snap ring 2, and another end (e.g., a right end as shown in FIG. 3) rotatably connected to the second mounting bracket 18 via a positioning pin 22, a bearing 21 and a snap ring 19. In alternative embodiments, the pressure unit 12 may be fixed to the mounting bracket (5, 18).

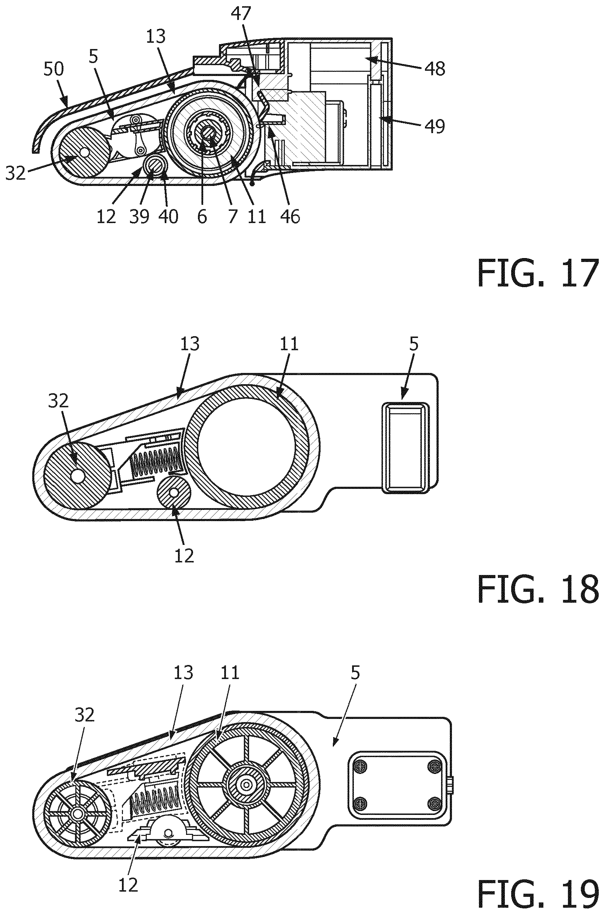

In other embodiments, the pressure unit 12 may have any other appropriate shapes. For example, the pressure unit 12 may have a column structure or a plate structure in contact with an inner surface of the cleaning member 13. Further, a raised rib(s) and/or a wheel(s) may be disposed on the pressure unit 12 (e.g., on the column structure or plate structure). Refer to FIG. 19, which shows the pressure unit 12 as having a plate structure, on which raised ribs and/or wheels are disposed. The raised rib(s) and/or wheel(s) may provide a required pressure, while reducing the friction with the inner surface of the cleaning member 13, which is benefit for the cleaning member 13 to rotate along with the first driving roller 11 and the second driving roller 32.

In one embodiment of the present disclosure, with reference to FIG. 1-FIG. 3, the cleaning assembly may include a release stick 9 movably disposed on the mounting bracket (5, 18), wherein the release stick 9 may be between the first driving roller 11 and the second driving roller 32. By example and without limitation, one end of the release stick 9 may be flexibly connected to the first surface of the first mounting bracket 5, and another end of the release stick 9 may be flexibly connected to the second surface of the second mounting bracket 18. For example, there may be bosses on the first surface of the first mounting bracket 5 and the second surface of the second mounting bracket 18, wherein two ends of the release stick 9 may be placed on the bosses of the first mounting bracket 5 and the second mounting bracket 18 respectively, and the release stick may move on the bosses. Each boss may have a limiting mechanism, such as a hole or a step, to limit a movement range of the release stick 9. A retainer 8 and a retainer 14 may be fixed to the first mounting bracket 5 and the second mounting bracket 18 respectively, and arranged to press the two ends of the release stick 9 to the bosses of the first mounting bracket 5 and the second mounting bracket 18.

In an embodiment of the present disclosure, the release stick 9 may move in an axial direction of the first driving roller 11, e.g., moving in a direction vertical to the first surface of the first mounting bracket 5 and/or the second surface of the second mounting bracket 18. Thus, the release stick 9 may move close to the first surface of the first mounting bracket 5 while moving away from the second surface of the second mounting bracket 18, or the release stick 9 may move close to the second surface of the second mounting bracket 18 while moving away from the first surface of the first mounting bracket 5.

With reference to FIG. 1, an end 91 of the release stick 9 may pass through the second mounting bracket 18, and may be exposed from another surface of the second mounting bracket 18 opposite to the second surface. By pressing the end 91 of the release stick 9, the release stick 9 may move between the first mounting bracket 5 and the second mounting bracket 18, e.g., close to the first mounting bracket 5 and away from the second mounting bracket 18. Alternatively, another end (not shown) of the release stick 9 may pass through the first mounting bracket 5 and be exposed, wherein the other end may be pressed to cause the release stick 9 to move between the first mounting bracket 5 and the second mounting bracket 18, e.g., close to the second mounting bracket 18 and away from the first mounting bracket 5.

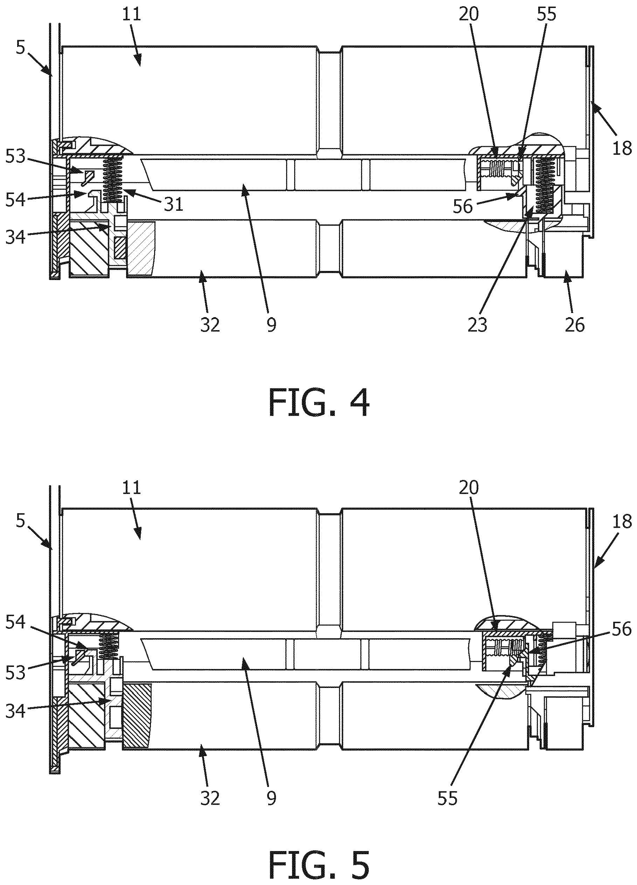

FIG. 4 is a partial structural schematic view of a cleaning assembly in a first state according to an embodiment of the present disclosure. A release stick spring 20 has two ends abutting against the release stick 9 and the second mounting bracket 18, respectively. When the release stick 9 moves between the first mounting bracket 5 and the second mounting bracket 18 (e.g., moving leftwards or rightwards), the release stick spring 20 may be compressed.

Further, the second fixed frame 34 may include a hook member 54 and/or the first fixed frame 29 may include a hook member 56, and the release stick 9 may include a step 53 and/or a step 55 at a corresponding location(s). When the second driving roller 32 moves close to the first driving roller 11, the hook members (54, 56) of the fixed frames may hitch on the steps (53, 55) of the release stick 9. It shall be appreciated that, it is illustrated as an example that the fixed frames (34, 29) include the hook members (54, 56) respectively and the release stick 9 includes the steps (53, 55). In some embodiments, a hook member may be selectively disposed on one fixed frame (29 or 34), and a single step may be disposed at a corresponding location on the release stick 9.

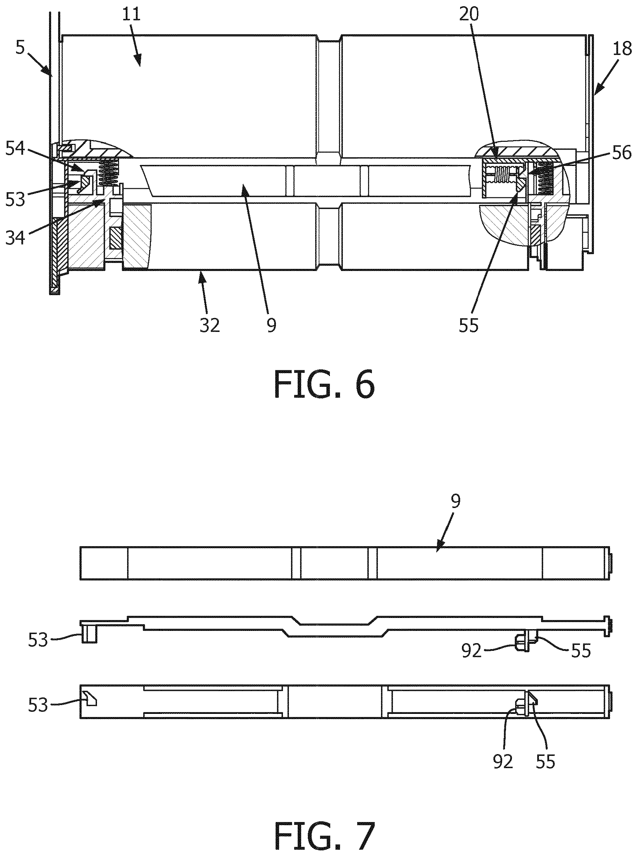

The step (53, 55) of the release stick 9 may have a gradient surface, as shown in FIG. 7. FIG. 7 shows a top view (upper), a side view (middle), and a bottom view (lower) of the release stick 9. FIG. 7 also shows a rib 92 (e.g., a cross rib) on the release stick 9 for arranging the release stick spring 20, where the second mounting bracket 18 may have a corresponding rib to limit the release stick spring 20. A right end of the release stick spring 20 may abut against the rib 92 of the release stick 9, and a left end of the release stick spring 20 may abut against the corresponding rib of the second mounting bracket 18 which extends to the left of the rib 92, so that the release stick spring 20 may be disposed between the release stick 9 and the second mounting bracket 18, as shown in FIG. 4.

In an alternative embodiment, an end of the release stick 9 may be exposed through the second mounting bracket 18, and the release stick spring 20 may be disposed between another end of the release stick 9 (or a rib near the other end) and the first mounting bracket 5. When the exposed end of the release stick 9 is pressed, the release stick 9 moves towards the first mounting bracket 5 and compresses the release stick spring 20. When the press disappears, the release stick spring 20 reposits the release stick 9.

With reference to FIG. 4-FIG. 5, when the second driving roller 32 moves towards the first driving roller 11 and the hook members (54, 56) of the fixed frames (34, 29) contact the steps (53, 55) of the release stick 9, the gradient surfaces of the steps on the release stick may cause the release stick 9 to move leftwards to some extent. Meanwhile, the release stick spring 20 would be compressed gradually.

As the second driving roller 32 continues to move towards the release stick 9, the hook members (54, 56) of the fixed frames (34, 29) would pass over the steps (53, 55) of the release stick 9, where a resilience of the release stick spring 20 drives the release stick 9 to move rightwards, such that the hook members (54, 56) of the fixed frames (34, 29) may hitch on the steps (53, 55) of the release stick 9 respectively, as shown in FIG. 6. Then, the second driving roller 32 is retained in a place close to the first driving roller 11, facilitating attachment, detachment or replacement of the cleaning member 13.

If it is required to resume a tensioned state after the cleaning member 13 is wrapped around the first driving roller 11 and the second driving roller 32, with reference to FIG. 2-FIG. 6, the end 91 of the release stick 9 may be pressed from right, causing the release stick 9 to move leftwards, where the steps (53, 55) of the release stick 9 exit from the hook members (54, 56) of the fixed frames (34, 29). With effects of the elastic elements (23, 31), the second driving roller 32 is ejected away from the first driving roller 11, such that the cleaning member 13 is tensioned. If the end 91 of the release stick 9 is released, a resilience of the release stick spring 20 causes the release stick 9 to return rightwards.

If the cleaning member 13 needs to be detached or replaced, the second driving roller 32 may be driven to move towards the first driving roller 11, such that the hook members (54, 56) of the fixed frames may get stuck on the steps (53, 55) of the release stick 9. Then, the second driving roller 32 is retained in a place close to the first driving roller 11, where the cleaning member 13 (e.g., a mop) is in a relaxed state, and a gap exists between the mop and the first and second driving rollers 11, 32, such that the cleaning member 13 may be detached or replaced.

It is noted that, although the first mounting bracket 5 and the second mounting bracket 18 may have different structures as described above, the respective structures of the first mounting bracket 5 and the second mounting bracket 18 may be interchangeable, without departing from the scope of the present disclosure. For example, it is shown above that the end 91 of the release stick 9 is exposed through the second mounting bracket 18, while in alternative embodiments, an end of the release stick 9 may be exposed through the first mounting bracket 5, and the release stick 9, when pressed at the end, may move towards the second mounting bracket 18.

It is described above that two ends of the first driving roller 11 may be connected differently, while in other embodiments, the two ends of the first driving roller 11 may be connected in a same manner, or connecting structures of left and right ends of the first driving roller 11 as described with reference to FIG. 3 may be interchangeable.

Similarly, the first fixed frame 29 and the second fixed frame 34 are described above as having different structures. However, in alternative embodiments, the first fixed frame 29 and the second fixed frame 34 may be interchangeable or may have a same structure.

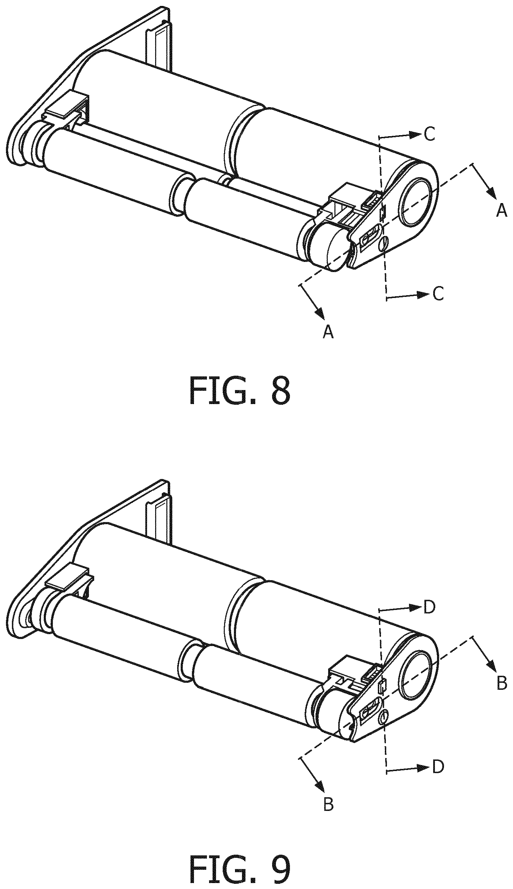

FIGS. 8-15 show alternative embodiments of the present disclosure. For brevity, elements that are same or similar to that in FIG. 1-FIG. 7 will be denoted with same reference labels, and will not be further described. In the alternative embodiments, the release stick 9 and relevant parts may be omitted.

FIG. 8 is a schematic view for a first state of a cleaning assembly according to another embodiment of the present disclosure, in which a second driving roller 32 is distant from a first driving roller 11, and a crawler mop is in a tensioned state, i.e., a cleaning state. FIG. 9 is a schematic view for a second state of a cleaning assembly according to another embodiment of the present disclosure, in which a second driving roller 32 is close to a first driving roller 11, in a mop attaching/detaching state. For example, a user may wrap a cleaning member (e.g., a crawler mop) around the first driving roller 11 and the second driving roller 32. Alternatively, where the first driving roller 11 and the second driving roller 32 are wrapped by a cleaning member, the first driving roller 11 and the second driving roller 32 would not expand the cleaning member, which may thus be in a relaxed state and can be detached.

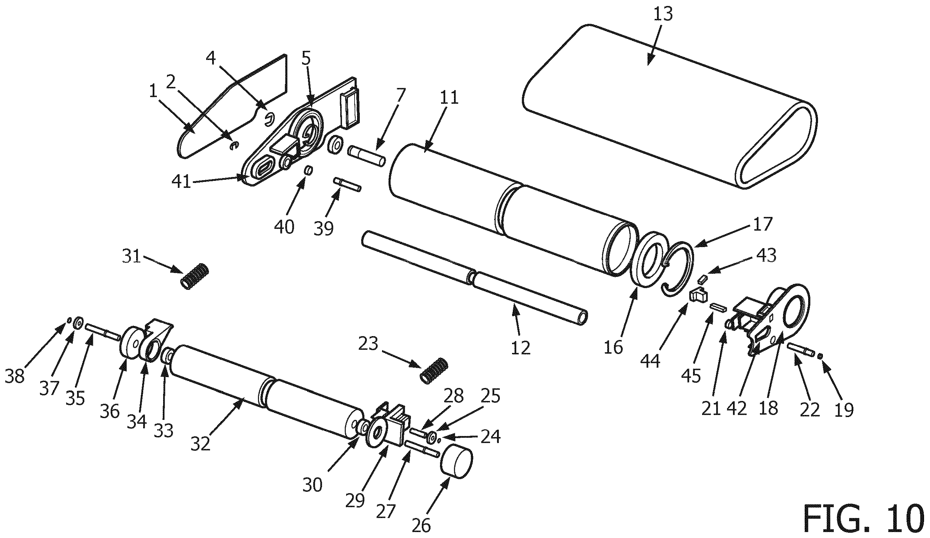

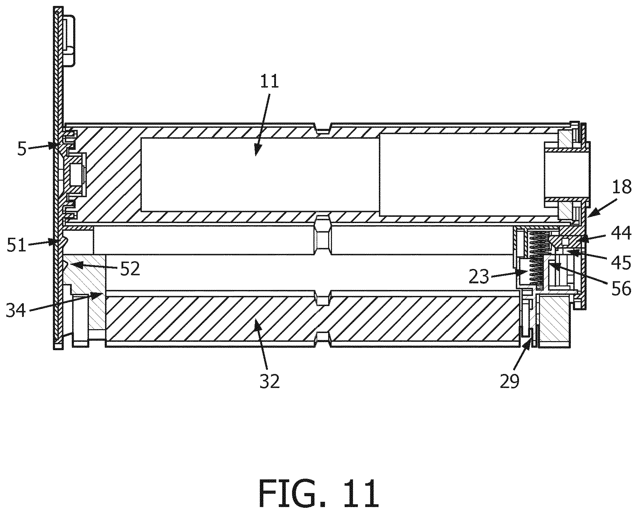

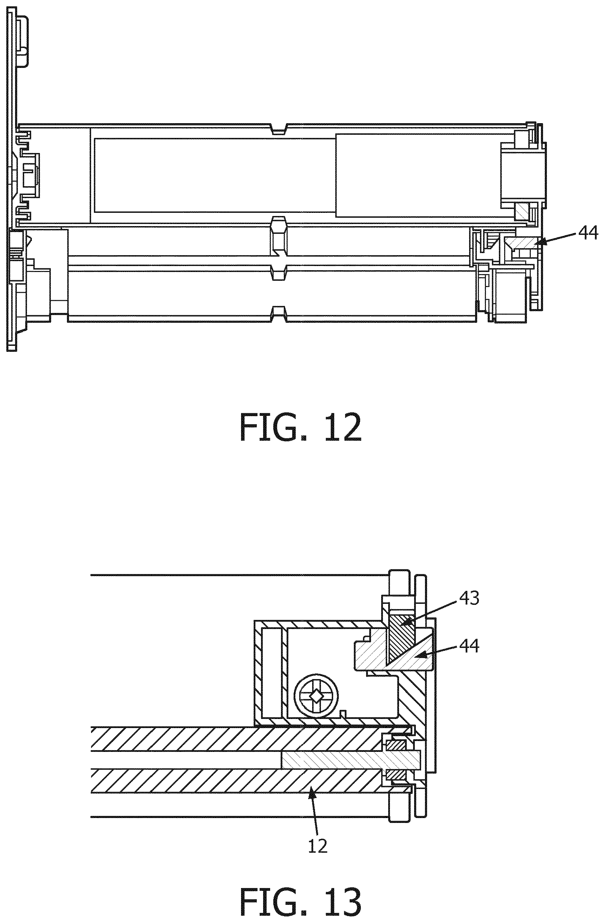

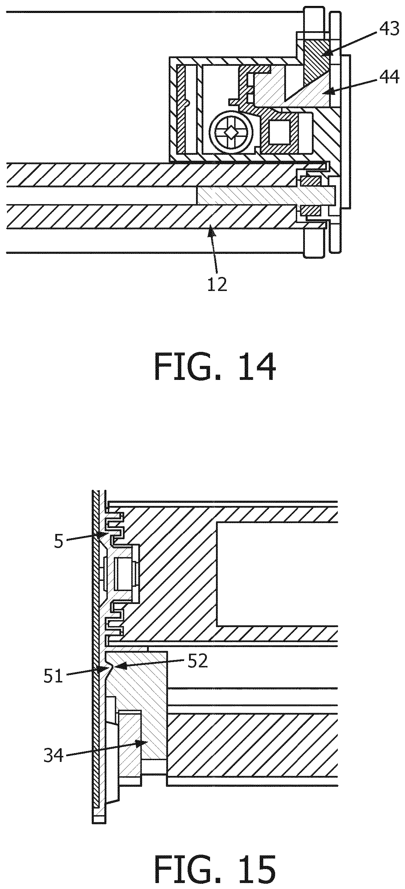

FIG. 10 is an exploded view of a cleaning assembly as in FIG. 8 and FIG. 9. FIG. 11 is a cross-sectional view along a direction A-A of the cleaning assembly in the first state as shown in FIG. 8. FIG. 12 is a cross-sectional view along a direction B-B of the cleaning assembly in the second state as shown in FIG. 9. FIG. 13 is a cross-sectional view along a direction C-C of the cleaning assembly in the first state as shown in FIG. 8. FIG. 14 is a cross-sectional view along a direction D-D of the cleaning assembly in the second state as shown in FIG. 9.

With reference to FIG. 8, FIG. 10, and FIG. 11, both ends of the first driving roller 11 are rotatably connected to a first mounting bracket 5 and a second mounting bracket 18. A guide 41 may be disposed on a first surface of the first mounting bracket 5, and/or a guide 42 may be disposed on a second surface of the second mounting bracket 18. As described above, the guide(s) on the first surface and/or the second surface may extend in a radial direction of the first driving roller 11. The second driving roller 32 may include a moving element(s) engaged with the guide(s), and thus may be coupled to the guide(s) of the first surface and/or the second surface via the moving element(s). The second driving roller 32 may be made to move away from or close to the first driving roller 11 as the moving element of the second driving roller 32 moves along the guide. A first additional driving roller 26 and/or a second additional driving roller 36 may be disposed at an end(s) of the second driving roller 32. Such three segments or multiple segments may be connected by a shaft therebetween, thereby achieving more effective edge cleaning.

Two ends of an elastic element 31 may abut against a raised structure on the first surface of the first mounting bracket 5 and a second fixed frame 34, respectively, and two ends of an elastic element 23 may abut against a raised structure on the second surface of the second mounting bracket 18 and a first fixed frame 29, respectively. When the cleaning assembly is in a working state (as shown in FIG. 8), the elastic elements (23, 31) may be in a pre-compressed state, such that the crawler mop is tensioned.

With reference to FIG. 11, the first fixed frame 29 may comprise a hook member 56, and a stopper 44 may be disposed on the second surface of the second mounting bracket 18. Two ends of a stopper spring 45 may abut against the second mounting bracket 18 and the stopper 44 respectively. When the second driving roller 32 moves close to the first driving roller 11, the hook member 56 of the first fixed frame 29 moves along a left end surface of the stopper 44, until the hook member 56 of the first fixed frame 29 passes over the stopper 44, where the stopper spring 45 drives the stopper 44 to move leftwards, such that the hook member 56 of the first fixed frame 29 hitches on the stopper 44 (e.g., an upper surface of the stopper 44). Therefore, the second driving roller 32 may be retained in a place close to the first driving roller 11, as shown in FIG. 12.

According to an optional embodiment of the present disclosure, with reference to FIG. 11, the first surface of the first mounting bracket 5 may have a protrusion portion 51, and the second fixed frame 34 may have a recess 52. When the second driving roller 32 is close to the first driving roller 11, preferably when the hook member 56 of the first fixed frame 29 is stuck on the stopper 44, the protrusion portion 51 on the first surface of the first mounting bracket 5 is fitted into the recess 52 of the second fixed frame 34.

In this optional embodiment, when the second driving roller 32 is applied a force towards the first driving roller 11, the second driving roller 32 performs a composite movement: in a radial direction, the second driving roller 32 moves towards the first driving roller 11 along guide(s) of the first mounting bracket 5 and/or the second mounting bracket 18; and in an axial direction, the second fixed frame 34 first moves rightwards, passing over the protrusion portion 51 on the first surface of the first mounting bracket 5 as shown in FIG. 11. Meanwhile, the hook member 56 of the first fixed frame 29 presses the stopper 44 rightwards, such that the stopper spring 45 is compressed. After the hook member 56 of the first fixed frame 29 passes over and hitches on the stopper 44, the stopper spring 45 rebounds and causes the stopper 44 to move leftwards, causing the first fixed frame 29 to move leftwards. Accordingly, the second driving roller 32 and the second fixed frame 34 move leftwards, where the protrusion portion 51 on the first surface of the first mounting bracket 5 is fitted into the recess 52 of the second fixed frame 34, and the second fixed frame 34 may abut against the first mounting bracket 5.

With the protrusion portion 51 of the first mounting bracket 5 being fitted into the recess 52 of the second fixed frame 34, in conjunction with the hook member of the first fixed frame 29 being stuck on the stopper 44, both ends of the second driving roller 32 may be retained steadily close to the first driving roller 11. Then, a mop may be attached or detached conveniently.

With reference to FIG. 13, the cleaning assembly may further include a release element 43 disposed on the second mounting bracket 18, wherein the release element 43 may move upwards and downwards. The release element 43 may have a slope at a lower end, and the stopper 44 may have a corresponding slope engaged with the slope of the release element 43. When the release element 43 is moved downwards by a force, the stopper 44 is driven to move rightwards and exits from the hook member 56 of the first fixed frame 29. Meanwhile, the stopper spring 45 is compressed. With effects of the elastic elements 23 and 31, the first fixed frame 29 and the second fixed frame 34 are ejected outwards, and thus the second driving roller 32 moves away from the first driving roller 11.

If the first mounting bracket 5 has a protrusion portion 51, which was fitted into the recess 52 of the second fixed frame 34, the second fixed frame 34 (as well as the second driving roller 32 and the first fixed frame 29) may move rightwards slightly under effects of the elastic elements 23 and 31, such that the recess 52 of the second fixed frame 34 may pass over the protrusion portion 51, thus the second driving roller 32 along with the first fixed frame 29 and the second fixed frame 34 moves away from the first driving roller 11.

With reference to FIG. 8, FIG. 10-FIG. 15, when the release element 43 is pressed, the second driving roller 32 is pushed wholly outwards under the effects of the elastic elements (23, 31). In this case, the second driving roller 32 performs a composite movement: in an axial direction, the second fixed frame 34 first moves rightwards, receding and passing over the protrusion portion 51 on the first mounting bracket 5, and then moves leftwards, abutting against the first mounting bracket 5; and in a radial direction, the whole second driving roller 32 moves away from the first driving roller 11 along the guides on the first mounting bracket 5 and the second mounting bracket 18. When the release element 43 is relaxed, a resilience of the stopper spring 45 drives the stopper 44 to move leftwards, which in turn reposits the release element 43 upwards.

The first fixed frame 29 and the second fixed frame 34 may have different structures, and are engaged with the second mounting bracket 18 and the first mounting bracket 5 respectively, as described above. In alternative embodiments, the first fixed frame 29 and the second fixed frame 34 may be interchanged, and a corresponding mounting bracket may comprise a corresponding structure. For example, the first mounting bracket 5 may be provided with a stopper 44, a stopper spring 45 and a release element 43, and the second fixed frame 34 may have a hook member 56 to hitch on the stopper 44. Optionally, the second mounting bracket 18 may have a protrusion portion 51, and the first fixed frame 29 may have a recess to receive the protrusion portion 51 of the second mounting bracket 18.

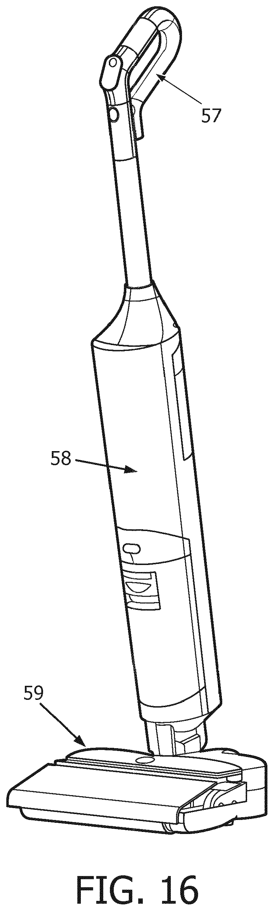

FIG. 16 is a structural schematic view of a surface cleaning device according to an embodiment of the present disclosure. The surface cleaning device may be a handheld surface cleaning device or an automatic surface cleaning device, such as a floor sweeper, a mopping machine, a floor washer, an integrated scrubber, a cleaning robot, a glass cleaner, a wall cleaner, etc.

The surface cleaning device may include a handle 57, a body 58, and a cleaner head 59, among other components. The cleaning assembly as described in above embodiments may be installed in the cleaner head 59, for contacting with a surface to be cleaned. As described above, the first mounting bracket 5 may optionally include a grip 3, to facilitate attaching the whole cleaning assembly to the cleaner head 59 or detaching it from the cleaner head 59. The body 58 may comprise a water tank and a sewage tank, among other components. For wet mopping, water may be sprayed from the water tank onto the cleaning member 13 via a tube, so as to keep the cleaning member 13 wet. After use, water may be squeezed from the cleaning member 13, wherein the squeezed water may be preserved in the sewage tank. Optionally, the surface cleaning device may include a motion element, which drives the surface cleaning device to move around on a surface to be cleaned, while the cleaning assembly is cleaning the surface to be cleaned.

FIG. 17 is a side cross-sectional view of a cleaner head of a surface cleaning device according to an embodiment of the present disclosure. By example and without limitation, the cleaner head may have a transparent housing 50 (or a non-transparent housing), which may overlay above the cleaning assembly. An optional water outlet 47 may spray water onto the cleaning member 13, to wash an outer surface of the cleaning member 13, and to keep the cleaning member 13 wet. A scraper 46 may scrape excess water from the cleaning member 13, in one aspect. In another aspect, the scraper 46 may help to evenly distribute the water sprayed from the water outlet 47 over the cleaning member 13. The cleaner head may also include an upper brush cover 48 and a lower brush cover 49, which enclose a portion of the cleaning assembly. A lower half of the cleaning member 13 may be exposed from the lower brush cover 49, to clean a surface to be cleaned.

FIG. 18 is a side cross-sectional view of a cleaning assembly in an embodiment of the present disclosure. It shows that a first driving roller 11 and a second driving roller 32 are wrapped around by a cleaning member 13, where the first driving roller 11 is distant from the second driving roller 32 to tension the cleaning member 13. A lower half of the cleaning member 13 operates as an active section, to contact a surface to be cleaned. A pressure unit 12 abuts against an inner surface of the cleaning member 13, and may provide a pressure against the surface to be cleaned, which may further improve cleaning effects.

Two sides of the pressure unit 12 may be rotatably or non-rotatably connected to a first mounting bracket 5 and a second mounting bracket 18. The pressure unit 12 may be a cylinder or roller, which contacts an inner surface of the active section (e.g., the lower half) of the cleaning member 13. In one embodiment, the pressure unit 12 may be located and sized such that a contact region between the pressure unit 12 and the cleaning member 13 (e.g., a radial end of the pressure unit 12) is on an external common tangent plane of the first driving roller 11 and the second driving roller 32, wherein the pressure unit 12 just touch the inner surface of the cleaning member 13 expanded by the first driving roller 11 and the second driving roller 32, and the active section of the cleaning member 13 is maintained flat without collapsing inwards. In another embodiment, the pressure unit 12 may be located and sized such that the pressure unit 12 protrudes from the external common tangent plane of the first driving roller 11 and the second driving roller 32, such that the cleaning member 13 is raised outwards slightly, making the cleaning member 13 contact a surface to be cleaned more tightly.

FIG. 19 is a side cross-sectional view of a cleaning assembly according to another embodiment of the present disclosure. A first driving roller 11 and a second driving roller 32 are wrapped by a cleaning member 13, where the first driving roller 11 is distant from the second driving roller 32 to tension the cleaning member 13. Two sides of a pressure unit 12 may be fixed to a first mounting bracket 5 and a second mounting bracket 18. The pressure unit 12 may have a plate structure, a curved surface, a wave-shaped surface, etc., to contact an inner surface of the cleaning member 13, so as to increase a contact area with the cleaning member 13. Optionally, the pressure unit may comprise a raised rib(s) and/or a wheel(s). The raised rib(s) and/or wheel(s) may provide a required pressure, while reducing the friction with the inner surface of the cleaning member 13, which is benefit for the cleaning member 13 to rotate along with the first driving roller 11 and the second driving roller 32.

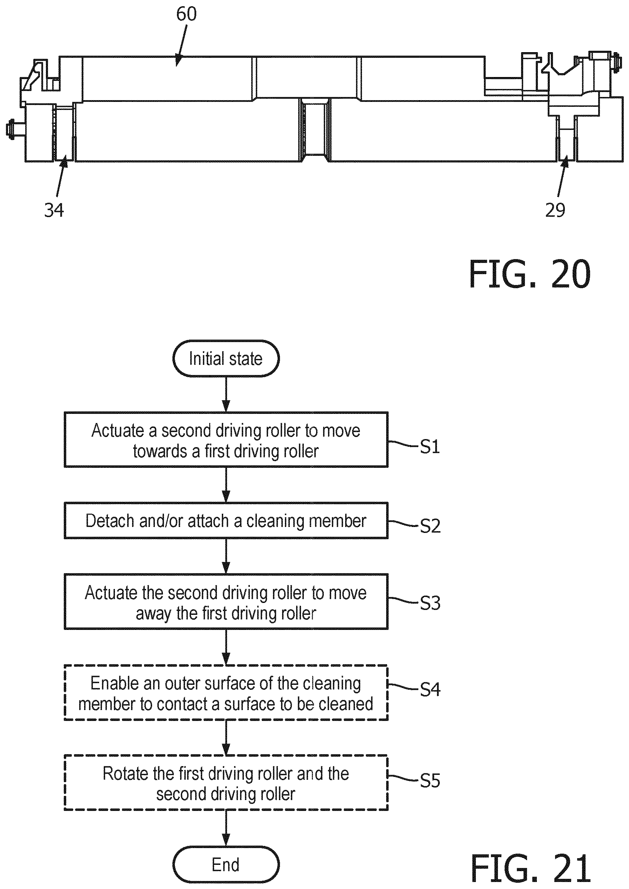

FIG. 20 is a schematic view of a fixed frame of a cleaning assembly according to another embodiment of the present disclosure. A first fixed frame 29 and a second fixed frame 34 have been described and shown in embodiments above. In some embodiments, the first fixed frame 29 and the second fixed frame 34 may be separate, and may be disposed at two ends of the second driving roller 32 respectively. In other embodiments, the first fixed frame 29 and the second fixed frame 34 may be connected with each other to form a whole fixed frame. As shown in FIG. 20, the first fixed frame 29 and the second fixed frame 34 may be connected with a stiffener 60. The stiffener 60 may be in a space between the first driving roller 11 and the second driving roller 32, without affecting attachment and rotation of the cleaning member 13. The stiffener 60 may be of any appropriate shape, such as a plate, a column, a bar, etc. The stiffener 60 may be formed integratedly with or separately from the first fixed frame 29 and/or the second fixed frame 34, and may be made of same or different materials as the fixed frame (29, 34).

The first fixed frame 29 and the second fixed frame 34 connected via the stiffener 60 may improve a strength of the whole fixed frame on one hand, and may also provide a consistent movement of the first fixed frame 29 and the second fixed frame 34 on the other hand.

As described above, the present disclosure discloses a cleaning assembly for surface cleaning, comprising a mounting bracket (5, 18), a first driving roller (11) and a second driving roller (32). The mounting bracket comprises a first surface and an opposite second surface, wherein a guide (41, 42) is disposed on the first surface and/or the second surface. A first driving roller is rotatably disposed between the first surface and the second surface of the mounting bracket. The second driving roller includes a moving element engaged with the guide, wherein the second driving roller moves away from or close to the first driving roller as the moving element of the second driving roller moves along the guide. A cleaning member (13) can be attached or detached conveniently when the second driving roller is close to the first driving roller. The cleaning member can be tensioned so as to perform a cleaning operation, when the second driving roller is distant from the first driving roller.

FIG. 21 shows a surface cleaning method with a cleaning assembly as described above according to an embodiment of the present disclosure. It is assumed that in an initial state, a second driving roller (32) of the cleaning assembly is in a place distant from the first driving roller (11).

At a step S1, the second driving roller may be actuated to move towards the first driving roller. As described above, a user may apply, to the second driving roller, a force towards the first driving roller, such that the second driving roller moves towards the first driving roller in a radial direction along a guide on a mounting bracket (5, 18).

At a step S2, a cleaning member may be detached and/or attached, when the second driving roller is close to the first driving roller. If the cleaning assembly does not have an attached cleaning member in the initial state, a cleaning member may be attached at the step S2. By example and without limitation, the cleaning member may be annular, and may be wrapped around the first driving roller and the second driving roller. If the cleaning assembly has an attached cleaning member in the initial state, the cleaning member may be detached at the step S2, and then a new or clean cleaning member may be attached.

In a further optional embodiment, when the second driving roller moves close to the first driving roller, a fixed frame connected with the second driving roller may get stuck on a stopper of the mounting bracket or may get stuck on a step of a release stick, so as to retain the second driving roller close to the first driving roller, thereby facilitating detachment and/or attachment of the cleaning member.

At a step S3, the second driving roller may be actuated to move away from the first driving roller. For example, one or more elastic elements (23, 31) disposed between the mounting bracket (5, 18) and the fixed frame (34, 29) may drive the second driving roller to move away from the first driving roller. As an example, after the cleaning member is wrapped around the first driving roller and the second driving roller, the second driving roller may be actuated to move away from the first driving roller so as to expand the cleaning member.

At an optional step S4, an outer surface of a portion of the cleaning member between the first driving roller and the second driving roller may be forced to contact a surface to be cleaned, so as to clean the surface to be cleaned.

At an optional step S5, the first driving roller and the second driving roller may be rotated. As described above, a gearbox assembly may operate to drive the first driving roller 11 to rotate, which causes the cleaning member to rotate, which further causes the second driving roller to rotate in a same direction as the first driving roller. Therefore, different portions of an outer surface of the cleaning member may take turns to clean a surface to be cleaned, until an end of a cleaning operation.

As those skilled in the art can understand, the steps shown in FIG. 21 are merely examples rather than limitation, and in specific implementations, some of the steps may be implemented or some of the steps may be implemented in different orders, or some of the steps may be performed repeatedly, or other steps may be added. For example, when a cleaning operation is completed, the steps S1 and S2 (and the optional step S3) may be performed, to detach the cleaning member without reattaching a cleaning member. In alternative embodiments, in the initial state, the second driving roller may be close to the first driving roller, such that the step S2 may be performed directly. Further, the steps S4 and S5 may be performed in any order, or performed in parallel.

The cleaning assembly, the surface cleaning device and the surface cleaning method provided in the present disclosure may have one or more of the following advantages. On one hand, the cleaning assembly can provide a large contact area between a cleaning member and a surface to be cleaned, thereby improving cleaning efficiency. On the other hand, a cleaning member can be conveniently attached to or detached from the cleaning assembly. Further, the cleaning assembly may have a pressure unit to provide tight contact between the cleaning member and a surface to be cleaned, thereby improving cleaning effects. The cleaning assembly, the surface cleaning device, and the surface cleaning method of the present invention may have additional advantages.

## Claims

1. A cleaning assembly for surface cleaning, comprising:
a mounting bracket (5, 18) having a first surface and an opposite second surface, the first surface and/or the second surface being disposed with a guide (41, 42);
a first driving roller (11) rotatably disposed between the first surface and the second surface of the mounting bracket;
a second driving roller (32) which comprises a moving element engaged with the guide, wherein the second driving roller is made to move away from or towards the first driving roller as the moving element of the second driving roller moves along the guide;
a cleaning member (13) wrapped around the first driving roller and the second driving roller, **characterized in that**:
a pressure unit (12) disposed on the mounting bracket, the cleaning member comprising an active section for contacting with a surface to be cleaned, the pressure unit being in contact with an inner surface of the active section of the cleaning member.

2. The cleaning assembly for surface cleaning of claim 1, wherein the second driving roller (32) further comprises a shaft (27, 35) and a fixed frame (29, 34), the shaft passing through the fixed frame and being rotatable with respect to the fixed frame.

3. The cleaning assembly for surface cleaning of claim 2, wherein the moving element comprises a first moving element at an end of the second driving roller and/or a second moving element at another end of the second driving roller, the first moving element being disposed on the shaft or comprising an end of the shaft, the second moving element being disposed on the fixed frame.

4. The cleaning assembly for surface cleaning of claim 2, further comprising:
an elastic element (23, 31),
wherein the mounting bracket comprises a raised structure on the first surface and/or the second surface, the elastic element is disposed between the raised structure of the mounting bracket and the fixed frame.

5. The cleaning assembly for surface cleaning of any of claims 2-4, wherein the fixed frame comprises a first fixed frame (29) which comprises a hook member, and the mounting bracket comprises a stopper (44) disposed on the second surface, wherein the hook member of the first fixed frame gets stuck on the stopper as the second driving roller moves close to the first driving roller.

6. The cleaning assembly for surface cleaning of claim 5, further comprising a release element (43) on the mounting bracket, wherein the release element, upon being actuated by a force, drives the stopper to disengage from the hook member of the first fixed frame.

7. The cleaning assembly for surface cleaning of claim 5, wherein the mounting bracket comprises a protrusion portion (51) disposed on the first surface, and the fixed frame further comprises a second fixed frame (34) which comprises a gap (52), wherein the protrusion portion on the first surface of the mounting bracket is fitted into the gap of the second fixed frame as the second driving roller moves close to the first driving roller.

8. The cleaning assembly for surface cleaning of any of claims 2-4, further comprising a release stick (9) disposed between the first surface and the second surface of the mounting bracket, the release stick comprising a step (53, 55),
wherein the fixed frame comprises a hook member (54, 56), which gets stuck on the step of the release stick as the second driving roller moves close to the first driving roller.

9. The cleaning assembly for surface cleaning of claim 8, wherein the release stick is moveably disposed on the mounting bracket, wherein the hook member of the fixed frame disengages from the step of the release stick if the release stick is actuated by a force.

10. The cleaning assembly for surface cleaning of any of claims 2-4, further comprising an additional driving roller (26, 36) disposed on the shaft of the second driving roller and between the fixed frame and the first and/or second surface of the mounting bracket.

11. The cleaning assembly for surface cleaning of any of claims 1-4,
wherein the pressure unit comprises a raised rib and/or a roller.

12. A surface cleaning device, comprising the cleaning assembly of any of claims 1-11.

13. A surface cleaning method, using the cleaning assembly of any of claims 1-11, comprising:
actuating the second driving roller to move towards the first driving roller; and
attaching or detaching the cleaning member when the second driving roller is close to the first driving roller.

14. The surface cleaning method of claim 13, further comprising:
actuating the second driving roller to move away from the first driving roller so as to expand the cleaning member, after the cleaning member is wrapped around the first driving roller and the second driving roller;
enabling an outer surface of a portion of the cleaning member located between the first driving roller and the second driving roller to contact a surface to be cleaned; and
rotating the first driving roller and the second driving roller.

## Patentansprüche

1. Reinigungsanordnung zur Oberflächenreinigung, umfassend:
eine Montagehalterung (5, 18), die eine erste Oberfläche und eine gegenüberliegende zweite Oberfläche aufweist, wobei die erste Oberfläche und/oder die zweite Oberfläche mit einer Führung (41, 42) angeordnet ist;
eine erste Antriebsrolle (11), die drehbar zwischen der ersten Oberfläche und der zweiten Oberfläche der Montagehalterung angeordnet ist;
eine zweite Antriebsrolle (32), die ein mit der Führung in Eingriff stehendes bewegliches Element umfasst, wobei die zweite Antriebsrolle so hergestellt ist, dass sie sich von der ersten Antriebsrolle weg oder in deren Richtung bewegt, wenn sich das bewegliche Element der zweiten Antriebsrolle entlang der Führung bewegt;
ein Reinigungselement (13), das um die erste Antriebsrolle und die zweite Antriebsrolle gewickelt ist, **gekennzeichnet durch**:
eine auf der Montagehalterung angeordnete Druckeinheit (12), wobei das Reinigungselement einen aktiven Abschnitt zum Kontakt mit einer zu reinigenden Oberfläche umfasst und die Druckeinheit mit einer Innenoberfläche des aktiven Abschnitts des Reinigungselements in Kontakt steht.

2. Reinigungsanordnung zur Oberflächenreinigung nach Anspruch 1, wobei die zweite Antriebsrolle (32) weiter eine Welle (27, 35) und einen feststehenden Rahmen (29, 34) umfasst, wobei die Welle durch den feststehenden Rahmen verläuft und in Bezug auf den feststehenden Rahmen drehbar ist.

3. Reinigungsanordnung zur Oberflächenreinigung nach Anspruch 2, wobei das bewegliche Element ein erstes bewegliches Element an einem Ende der zweiten Antriebsrolle und/oder ein zweites bewegliches Element am anderen Ende der zweiten Antriebsrolle umfasst, wobei das erste bewegliche Element auf der Welle angeordnet ist oder ein Ende der Welle umfasst, wobei das zweite bewegliche Element auf dem feststehenden Rahmen angeordnet ist.

4. Reinigungsanordnung zur Oberflächenreinigung nach Anspruch 2, weiter umfassend:
ein elastisches Element (23, 31),
wobei die Montagehalterung eine erhöhte Struktur auf der ersten Oberfläche und/oder der zweiten Oberfläche umfasst, wobei das elastische Element zwischen der erhöhten Struktur der Montagehalterung und dem feststehenden Rahmen angeordnet ist.

5. Reinigungsanordnung zur Oberflächenreinigung nach einem der Ansprüche 2-4, wobei der feststehende Rahmen einen ersten feststehenden Rahmen (29) umfasst, der ein Hakenelement umfasst, und die Montagehalterung einen auf der zweiten Oberfläche angeordneten Anschlag (44) umfasst, wobei das Hakenelement des ersten feststehenden Rahmens am Anschlag einhakt, wenn sich die zweite Antriebsrolle näher zur ersten Antriebsrolle bewegt.

6. Reinigungsanordnung zur Oberflächenreinigung nach Anspruch 5, weiter umfassend ein Freigabeelement (43) an der Montagehalterung, wobei das Freigabeelement, wenn es durch eine Kraft betätigt wird, den Anschlag antreibt, um sich aus dem Hakenelement des ersten feststehenden Rahmens zu lösen.

7. Reinigungsanordnung zur Oberflächenreinigung nach Anspruch 5, wobei die Montagehalterung einen auf der ersten Oberfläche angeordneten Vorsprungsabschnitt (51) umfasst und der feststehende Rahmen weiter einen zweiten feststehenden Rahmen (34) umfasst, der einen Spalt (52) umfasst, wobei der Vorsprungsabschnitt auf der ersten Oberfläche der Montagehalterung in den Spalt des zweiten feststehenden Rahmens passt, wenn sich die zweite Antriebsrolle näher zur ersten Antriebsrolle bewegt.

8. Reinigungsanordnung zur Oberflächenreinigung nach einem der Ansprüche 2-4, weiter umfassend einen Freigabestift (9), der zwischen der ersten Oberfläche und der zweiten Oberfläche der Montagehalterung angeordnet ist, wobei der Freigabestift eine Stufe (53, 55) umfasst,
wobei der feststehende Rahmen ein Hakenelement (54, 56) umfasst, das an der Stufe des Freigabestifts einhakt, wenn sich die zweite Antriebsrolle näher zur ersten Antriebsrolle bewegt.

9. Reinigungsanordnung zur Oberflächenreinigung nach Anspruch 8, wobei der Freigabestift beweglich auf der Montagehalterung angeordnet ist, wobei sich das Hakenelement des feststehenden Rahmens aus der Stufe des Freigabestift löst, wenn der Freigabestift durch eine Kraft betätigt wird.

10. Reinigungsanordnung zur Oberflächenreinigung nach einem der Ansprüche 2-4, weiter umfassend eine zusätzliche Antriebsrolle (26, 36), die auf der Welle der zweiten Antriebsrolle und zwischen dem feststehenden Rahmen und der ersten und/oder zweiten Oberfläche der Montagehalterung angeordnet ist.

11. Reinigungsanordnung zur Oberflächenreinigung nach einem der Ansprüche 1-4, wobei die Druckeinheit eine erhöhte Rippe und/oder eine Walze umfasst.

12. Oberflächenreinigungsvorrichtung, umfassend die Reinigungsanordnung nach einem der Ansprüche 1-11.

13. Oberflächenreinigungsverfahren unter Verwendung der Reinigungsanordnung nach einem der Ansprüche 1-11, umfassend:
Betätigen der zweiten Antriebsrolle, um sie in Richtung der ersten Antriebsrolle zu bewegen; und
Anbringen oder Abnehmen des Reinigungselements, wenn sich die zweite Antriebsrolle näher zur ersten Antriebsrolle befindet.

14. Oberflächenreinigungsverfahren nach Anspruch 13, weiter umfassend:
Betätigung der zweiten Antriebsrolle, um sie von der ersten Antriebsrolle wegzubewegen, um das Reinigungselement auszudehnen, nachdem das Reinigungselement um die erste Antriebsrolle und die zweite Antriebsrolle gewickelt wurde;
Ermöglichen, dass eine Außenoberfläche eines Abschnitts des Reinigungselements, das zwischen der ersten Antriebsrolle und der zweiten Antriebsrolle gelegen ist, mit einer zu reinigenden Oberfläche in Kontakt kommt; und
Drehen der ersten Antriebsrolle und der zweiten Antriebsrolle.

## Revendications

1. Ensemble de nettoyage pour le nettoyage de surfaces, comprenant :
un support de montage (5, 18) présentant une première surface et une seconde surface opposée, la première surface et/ou la seconde surface étant disposées avec un guide (41, 42) ;
un premier rouleau d'entraînement (11) disposé de manière rotative entre la première surface et la seconde surface du support de montage ;
un second rouleau d'entraînement (32) qui comprend un élément mobile engagé avec le guide, dans lequel le second rouleau d'entraînement est amené à s'éloigner ou à se rapprocher du premier rouleau d'entraînement lorsque l'élément mobile du second rouleau d'entraînement se déplace le long du guide ;
un élément de nettoyage (13) enroulé autour du premier rouleau d'entraînement et du second rouleau d'entraînement, **caractérisé en ce que** :
une unité de pression (12) disposée sur le support de montage, l'élément de nettoyage comprenant une section active pour entrer en contact avec une surface à nettoyer, l'unité de pression étant en contact avec une surface intérieure de la section active de l'élément de nettoyage.

2. Ensemble de nettoyage pour le nettoyage de surface de la revendication 1, dans lequel le second rouleau d'entraînement (32) comprend en outre un arbre (27, 35) et un cadre fixe (29, 34), l'arbre passant à travers le cadre fixe et étant rotatif par rapport au cadre fixe.

3. Dispositif de nettoyage pour le nettoyage de surfaces selon la revendication 2, dans lequel l'élément mobile comprend un premier élément mobile au niveau d'une extrémité du second rouleau d'entraînement et/ou un second élément mobile au niveau d'une autre extrémité du second rouleau d'entraînement, le premier élément mobile étant disposé sur l'arbre ou comprenant une extrémité de l'arbre, le second élément mobile étant disposé sur le cadre fixe.

4. Ensemble de nettoyage pour le nettoyage de surfaces selon la revendication 2, comprenant en outre :
un élément élastique (23, 31),
dans lequel le support de montage comprend une structure surélevée sur la première surface et/ou la seconde surface, l'élément élastique est disposé entre la structure surélevée du support de montage et le cadre fixe.

5. Ensemble de nettoyage pour le nettoyage de surfaces selon l'une quelconque des revendications 2-4, dans lequel le cadre fixe comprend un premier cadre fixe (29) qui comprend un élément de crochet et le support de montage comprend une butée (44) disposée sur la seconde surface, dans lequel l'élément de crochet du premier cadre fixe se bloque sur la butée lorsque le second rouleau d'entraînement se rapproche du premier rouleau d'entraînement.

6. Ensemble de nettoyage pour le nettoyage de surfaces selon la revendication 5, comprenant en outre un élément de libération (43) sur le support de montage, dans lequel l'élément de libération, lorsqu'il est actionné par une force, entraîne le désengagement de l'élément de crochet du premier cadre fixe.

7. Ensemble de nettoyage pour le nettoyage de surfaces selon la revendication 5, dans lequel le support de montage comprend une partie saillante (51) disposée sur la première surface et le cadre fixe comprend en outre un second cadre fixe (34) qui comprend un espace (52), dans lequel la partie saillante sur la première surface du support de montage est insérée dans l'espace du second cadre fixe lorsque le second rouleau d'entraînement se rapproche du premier rouleau d'entraînement.

8. Ensemble de nettoyage pour le nettoyage de surfaces selon l'une quelconque des revendications 2-4, comprenant en outre une tige de libération (9) disposée entre la première surface et la seconde surface du support de montage, la tige de libération comprenant un palier (53, 55),
dans lequel le cadre fixe comprend un élément de crochet (54, 56), qui se bloque sur le palier de la tige de libération lorsque le second rouleau d'entraînement se rapproche du premier rouleau d'entraînement.

9. Ensemble de nettoyage pour le nettoyage de surfaces de la revendication 8, dans lequel la tige de libération est disposée de manière mobile sur le support de montage, dans lequel l'élément de crochet du cadre fixe se désengage du palier de la tige de libération si la tige de libération est actionnée par une force.

10. Ensemble de nettoyage pour le nettoyage de surfaces selon l'une quelconque des revendications 2-4, comprenant en outre un rouleau d'entraînement supplémentaire (26, 36) disposé sur l'arbre du second rouleau d'entraînement et entre le cadre fixe et la première et/ou le seconde surface du support de montage.

11. Ensemble de nettoyage pour le nettoyage de surfaces selon l'une quelconque des revendications 1-4,
dans lequel l'unité de pression comprend une nervure surélevée et/ou un rouleau.

12. Dispositif de nettoyage de surfaces, comprenant l'ensemble de nettoyage selon l'une quelconque des revendications 1-11.

13. Procédé de nettoyage de surfaces, utilisant l'ensemble de nettoyage selon l'une quelconque des revendications 1-11, comprenant :
l'actionnement du second rouleau d'entraînement pour qu'il se rapproche du premier rouleau d'entraînement ; et
la fixation ou le détachement de l'élément de nettoyage lorsque le second rouleau d'entraînement s'est rapproché du premier rouleau d'entraînement.

14. Procédé de nettoyage de surfaces selon la revendication 13, comprenant en outre :
l'actionnement du second rouleau d'entraînement pour l'éloigner du premier rouleau d'entraînement afin de déployer l'élément de nettoyage, après que l'élément de nettoyage s'est enroulé autour du premier rouleau d'entraînement et du second rouleau d'entraînement ;
le fait de permettre à une surface extérieure d'une partie de l'élément de nettoyage située entre le premier rouleau d'entraînement et le second rouleau d'entraînement d'entrer en contact avec une surface à nettoyer ; et
le fait de faire tourner le premier rouleau d'entraînement et le second rouleau d'entraînement.
